# FASCICULE DE BREVET EUROPEEN

(11) **EP 0 442 836 B1**
(45) Date de publication et mention de la délivrance du brevet: **21.12.1994**
(21) Numéro de dépôt: 91470004.2
(22) Date de dépôt: 04.02.1991
(51) Int. Cl.: B29C 49/64, B29C 71/02

(54) **Procédé et installation pour fabriquer des récipients, tels que des bouteilles, en polyéthylènetéréphtalate, résistant à des conditions thermiques relativement sévères au cours de leur utilisation**
Verfahren und Vorrichtung zum Herstellen von während ihres Gebrauchs in verhältnismässig extremen thermischen Bedingungen beständigen Behältern, zum Beispiel Flaschen aus Polyethylenterephthalat
Method and apparatus for the manufacture of containers, such as bottles, made of polyethylene-terephthalate, resistant to relatively severe thermal conditions during their use

(30) Priorité: 13.02.1990 FR 9001688
(43) Date de publication de la demande: 21.08.1991
(73) Titulaire: SIDEL, F-76600 Le Havre (FR)
(72) Inventeur: Denis, Gérard, F-76280 Turretot (FR); La Barre, Paul, F-76310 Sainte-Adresse (FR)
(74) Mandataire: Gorree, Jean-Michel

(56) Documents cités:
- EP-A- 0 237 459

## Description

La présente invention concerne un procédé et une intallation pour fabriquer des récipients tels que des bouteilles en polyéthylènetéréphtalate (PET) aptes à subir, ultérieurement, sans déformations notables, des conditions thermiques relativement sévères rencontrées au cours de processus tels que leur remplissage par un liquide chaud ou la pasteurisation de leur contenu.

Le document FR-A-2 595 294 (EP-A-0 237 459) divulgue un procédé et une installation de ce genre qui permettent de fabriquer des récipients, et notamment des bouteilles, qui répondent parfaitement aux exigences imposées et qui supportent sans déformations notables par exemple un remplissage avec un liquide chaud (température supérieure à 80°C) ou une opération de pasteurisation.

Toutefois, il s'est avéré a l'expérience qu'il était souhaitable de réduire autant que possible le nombre des postes de traitement des récipients au cours de la fabrication et/ou d'en simplifier la structure, ce qui influe favorablement non seulement sur le coût global de l'installation (diminution du prix d'achat, diminution des coûts de transport, diminution du coût d'entretien et des risques d'incidents), mais aussi sur la durée de fabrication de chaque récipient.

L'invention a donc essentiellement pour but de proposer un nouveau procédé et une nouvelle installation permettant de satisfaire à ces exigences, tout en conservant les deux étapes consécutives d'étirage-soufflage mises en oeuvre conformément au brevet FR 2 595 294, qui confèrent aux récipients l'aptitude recherchée de résistance à des conditions thermiques relativement sévères.

A ces fins, selon un premier aspect de l'invention, il est proposé un procédé du genre précité qui se caractérise essentiellement en ce qu'il comprend la succession des étapes suivantes :
a) on chauffe, à une température au moins égale à la température de ramolissement du PET, le corps seul (en excluant le goulot) d'une préforme du récipient constituée en PET amorphe, avec le goulot du récipient déjà conformé à sa forme et à ses dimensions définitives;
b) on moule le corps de préforme chaud pour constituer un récipient intermédiaire dont le corps possède des dimensions supérieures d'environ 20 % en hauteur et de 0 à 30 % transversalement aux dimensions du récipient définitif à obtenir, tandis que les parois de conformation par moulage du récipient intermédiaire sont refroidies à une température d'environ 5 à 40°C ;
c) dans une ambiance à température comprise entre 160° et 240°C, on chauffe ensuite le corps du récipient intermédiaire à une température de 160 à 240°C pendant une durée d'environ 30 s à 5 mn : et, après ou pendant tout ou partie de la durée de chauffage du corps, on chauffe également le goulot dans des conditions de température et de durée propres à assurer la cristallisation du PET du goulot seul, puis on procède à un refroidissement relativement lent du goulot ;
d) puis enfin, le corps rétréci chaud du récipient intermédiaire obtenu à la fin de l'étape c) est moulé une nouvelle fois à sa forme et à ses dimensions définitives, pendant une durée d'environ 2 à 6 secondes.

Ainsi, selon la présente invention, on supprime l'étape préliminaire de formation du goulot cristallisé qui était requise dans le procédé selon le brevet FR N° 2 595 294 et on intègre cette étape dans l'étape déjà existante de chauffage du récipient intermédiaire intervenant entre les deux étapes consécutives d'étirage-soufflage du corps du récipient. Ce regroupement des deux étapes, qui toutes deux consistent en un chauffage, a des répercussions économiques intéressantes sur la structure de l'installation comme cela sera explicité plus loin. En outre, le regroupement de ces deux étapes de chauffage a également pour conséquence de réduire d'autant (de l'ordre de 30 à 60 s) la durée de fabrication de chaque récipient.

Dans une première variante de mise en oeuvre de l'étape c) de ce procédé, on commence par chauffer le corps seul du récipient intermédiaire , le goulot n'étant pas chauffé ; puis on chauffe le goulot en même temps qu'on poursuit le chauffage du corps ; enfin on refroidit le goulot seul pendant que se poursuit et s'achève le chauffage du corps seul ; avantageusement, le chauffage préalable du corps seul est effectué pendant une durée de 3 à 30 s, notamment d'environ 5 s.

Dans une deuxième variante de mise en oeuvre de l'étape c) de ce procédé, on chauffe simultanément l'ensemble du récipient intermédiaire, corps et goulot; puis on refroidit le goulot seul pendant que se poursuit et s'achève le chauffage du corps seul.

Avantageusement, dans l'une et l'autre de ces deux variantes, le refroidissement du goulot seul comprend une étape de stabilisation à une température ambiante comprise entre 50 et 100°C pendant une durée de 5 à 30 s, notamment d'environ 20 s ; puis une étape de refroidissement proprement dite pendant une durée de 20 à 40 s, notamment d'environ 25 s.

Dans une troisième variante de mise en oeuvre de l'étape c) de ce procédé, on chauffe simultanément l'ensemble du récipient intermédiaire, goulot et corps ; puis on refroidit simultanément l'ensemble du récipient obtenu, goulot et corps ; puis enfin on chauffe à nouveau le corps en vue de la mise en oeuvre de l'étape d). Pour effectuer le chauffage, on a alors la possibilité de chauffer le corps seul, en protégeant éventuellement le goulot ; ou bien aussi de chauffer l'ensemble du récipient, goulot et corps, avec un rayonnement infrarouge pendant une courte durée : la paroi épaisse du goulot n'a pas le temps de s'échauffer notablement et seule la paroi mince du corps est substantiellement chauffée ; dans ce cas, le chauffage final du corps, en vue de la mise en oeuvre de l'étape d), est effectuée pendant une durée de 3 à 20 s, notamment d'environ 5s. Avantageusement également, le refroidissement simultané de l'ensemble du récipient corps et goulot, est effectué pendant une durée de 10 à 60 s, notamment d'environ 40 s.

Enfin, de préférence, le chauffage simultané de l'ensemble du récipient, goulot et corps, au cours de l'étape c) est effectué pendant une durée de 30 à 90 s, notamment d'environ 45 s.

Selon un second aspect de l'invention, il est proposé une installation du genre précité comprenant :
- un premier dispositif de chauffage pour chauffer, à une température au moins égale à la température de ramolissement du PET, le corps seul (à l'exclusion du goulot) d'une préforme du récipient constituée en PET amorphe, avec le goulot déjà conformé à sa forme et à ses dimensions définitives, ce dispositif étant en outre agencé pour assurer une protection thermique du goulot afin d'empêcher son échauffement :
- une première matrice de moulage pour former le corps d'un récipient intermédiaire à partir du corps de la préforme, la première matrice de moulage possédant une cavité de moulage ayant des dimensions supérieures d'environ 20 % en hauteur et de 0 à 30 % transversalement aux dimensions du récipient définitif à obtenir, cette première matrice étant équipée de moyens de refroidissement des parois de la cavité à une température d'environ 5 à 40°C ; et
   un poste de traitement dans une ambiance à température comprise entre 160° et 240°C avec un deuxième
- une seconde matrice de moulage pour former le corps du récipient définitif à partir du corps chauffé du récipient intermédiaire, cette seconde matrice de moulage possédant une cavité de moulage ayant les dimensions correspondant à celles du corps du récipient définitif et étant munie de moyens permettant le maintien des parois de la cavité à une température déterminée ;
   laquelle installation se caractérise essentiellement en ce qu'elle comprend en outre dispositif de chauffage comportant un premier ensemble de chauffage pour chauffer le corps du récipient intermédiaire à une température d'environ 160 à 240°C et un second ensemble de chauffage pour chauffer également, après ou pendant tout ou partie du chauffage du corps, le goulot dans des conditions de température et de durée propres à assurer la cristallisation du PET du goulot seul ; ce poste de traitement comportant en outre des moyens de refroidissement relativement lent du goulot.

Grâce à un tel agencement, on s'affranchit du dispositif de chauffage initial, destiné à la cristallisation du goulot seul, qui était prévu dans l'installation du brevet FR. 2 595 294. La suppression de ce dispositif de chauffage, des transporteurs associés et de tous les équipements annexes correspondants rend l'installation moins coûteuse à l'achat, plus compacte, moins sujette aux pannes ou incidents de fonctionnement, moins coûteuse à l'entretien, plus facile et moins coûteuse à transporter. En outre, la réduction concomittante du temps de réalisation de chaque récipient permet d'accélérer la fabrication.

Dans un premier mode de réalisation le deuxième dispositif de chauffage est agencé pour que le premier ensemble de chauffage chauffe d'abord le corps seul du récipient intermédiaire, le goulot n'étant pas chauffé ; puis pour que les premier et second ensembles de chauffage chauffent l'ensemble du récipient, respectivement corps et goulot ; et enfin pour que le premier ensemble de chauffage continue et achève le chauffage du corps seul pendant que le goulot est refroidi.

Dans un deuxième mode de réalisation', le deuxième dispositif de chauffage est agencé pour que les premier et second ensembles de chauffage chauffent l'ensemble du récipient intermédiaire, respectivement corps et goulot ; puis pour que le premier ensemble de chauffage continue et achève le chauffage du corps seul pendant que le goulot est refroidi.

Dans un troisième mode de réalisation, le deuxième dispositif es agencé pour que les premier et second ensembles de chauffage chauffent l'ensemble du récipient intermédiaire, corps et goulot, les moyens de refroidissement sont agencés pour refroidir l'ensemble du récipient, goulot et corps ; et il est prévu ensuite un troisième dispositif de chauffage agencé pour chauffer le corps du récipient avant l'introduction de celui-ci dans la seconde matrice de moulage.

Dans ce dernier cas, on peut prévoir que le troisième dispositif de chauffage est agencé pour chauffer le corps seul du récipient, ou bien encore en variante que le troisième dispositif de chauffage est agencé pour chauffer l'ensemble du récipient, corps et goulot, et est équipé d'organes de chauffage émettant un rayonnement infrarouge, ce grâce à quoi seul, le corps est substantiellement chauffé.

L'invention sera mieux comprise à la lecture de la description détaillée qui suit de certains de ses modes de réalisation préférés, donnés uniquement à titre d'exemples non limitatifs. Dans cette description, on se réfère aux dessins annexés sur lesquels :
- les figures 1A et 1B illustrent, de façon très schématique, successivement les différents postes d'une installation conforme à l'invention, mettant en oeuvre le procédé de l'invention ;
- les figures 2, 3 et 4 illustrent de façon très schématique respectivement trois variantes de réalisation de l'un des postes de la partie de l'installation représentée à la figure 1B, mettant respectivement en oeuvre trois variantes du procédé de l'invention ; et
- la figure 5 représente une même bouteille obtenue conformément à l'invention à différents stades de sa fabrication, en correspondance avec les postes de l'installation des figures 1A et 1B.

En se référant maintenant à l'ensemble des figures, la mise en oeuvre de l'invention est effectuée en partant d'une préforme de bouteille 1 obtenue, d'une façon en soit connue, par une opération de moulage par injection de polyéthylènetéréphtalate (PET) ; à ce stade initial, le PET est amorphe et l'ensemble de la préforme (goulot 2 et corps 3) est transparent ; il faut noter également que la préforme est moulée avec un goulot 2 présentant sa forme exacte et ses dimensions définitives, mais dont les caractéristiques mécaniques ne sont pas fixées en raison du caractère amorphe du PET.

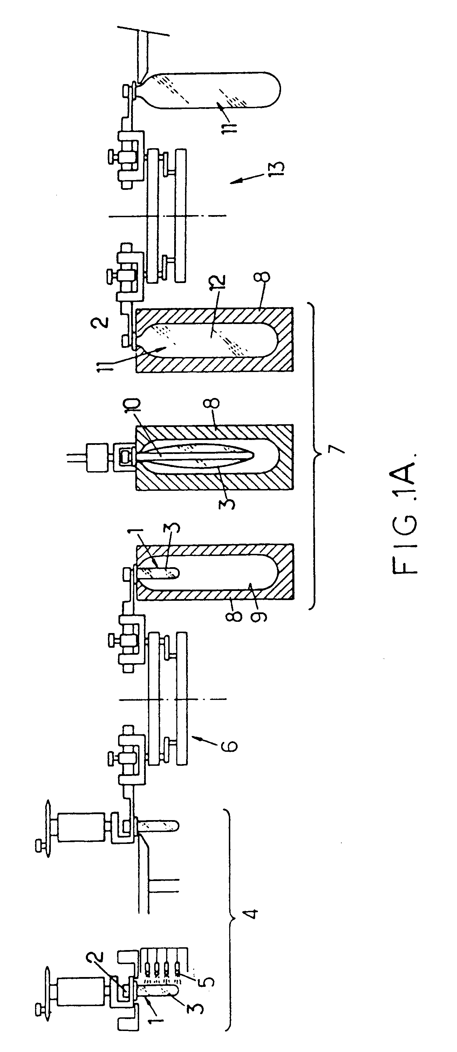

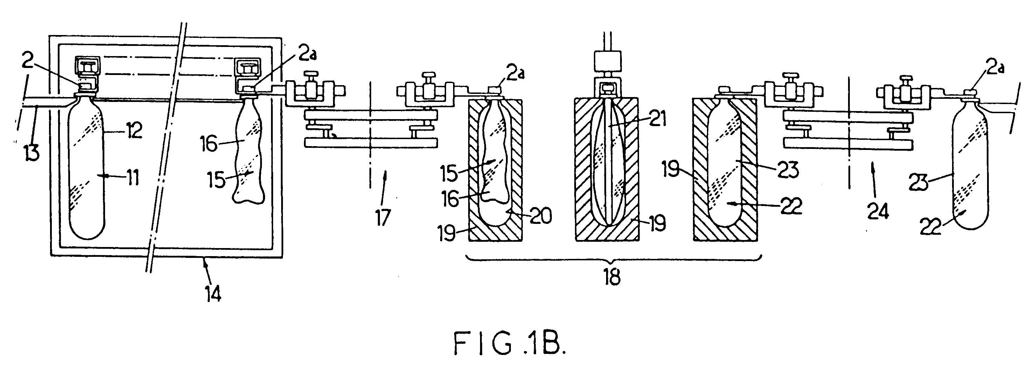

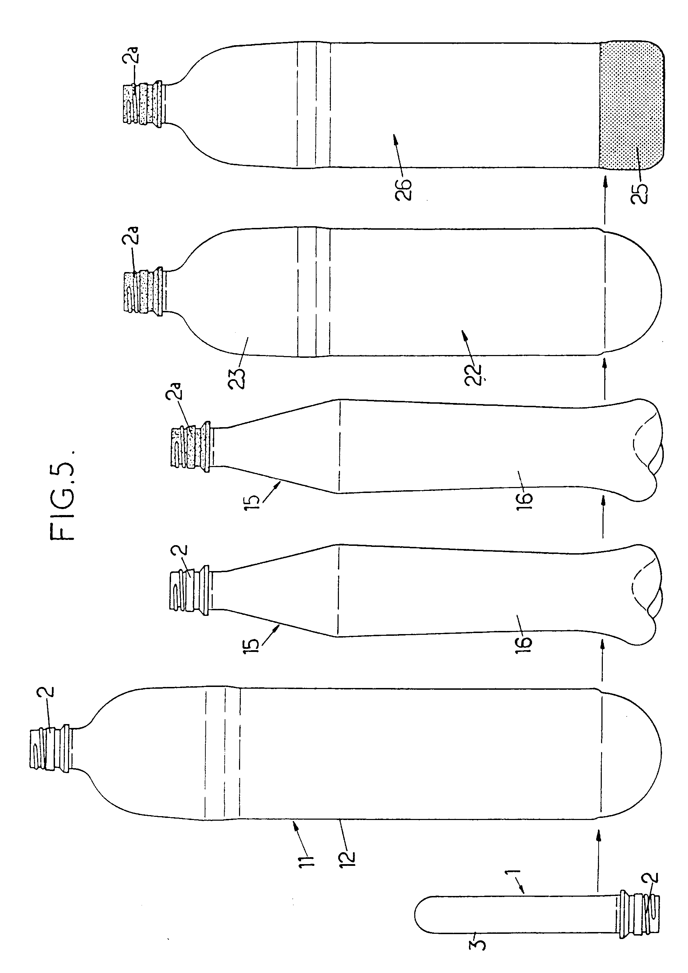

En se reportant tout d'abord aux figures 1A et 5, les préformes 1 en provenance d'une réserve (non représentée) sont orientées et acheminées par un dispositif transporteur (non montré) jusqu'à un premier poste 4 de chauffage, lequel comporte une succession de fours à infrarouge 5 agencés en forme d'un couloir ou d'un tunnel à l'intérieur duquel sont déplacées les préformes, les goulots 2 en PET amorphe de celles-ci étant protégés thermiquement au cours de cette opération. La température de chauffage est d'au moins 70-72°C (température de transition vitreuse du PET), de préférence de 100 à 120°C pendant 25 secondes environ.

Les préformes à corps chauffé sont ensuite emportées, par un transporteur 6, jusqu'à un premier poste de moulage 7 (avantageusement agencé sous forme d'un carrousel). Le corps chaud 3 de la préforme est introduit dans une matrice 8 dont la cavité 9 présente des dimensions sensiblement supérieures d'environ 20 % en hauteur et de 0 à 30 % transversalement à celles du récipient définitif à obtenir.

Le moulage s'effectue en introduisant un mandrin mobile 10 à l'intérieur de la préforme 1 pour allonger axialement le corps 3 de celle-ci jusqu'au fond de la cavité 9 de la matrice, et en insufflant un fluide sous pression, par exemple de l'air comprimé, avec d'abord un pré-soufflage facultatif sous environ 10 bars pour mettre sous tension le film de matériau, puis avec un soufflage sous 15 à 40 bars pour dilater le corps et l'appliquer contre les parois de la cavité 9, l'ensemble du cycle ayant une durée d'environ 2 à 10 secondes. Il est important de noter que, durant cette opération, les parois de la matrice sont refroidies, à l'air et/ou à l'eau, de manière que la température reste comprise entre 5 et 40°C, de préférence comprise entre 10°C et 15°C.

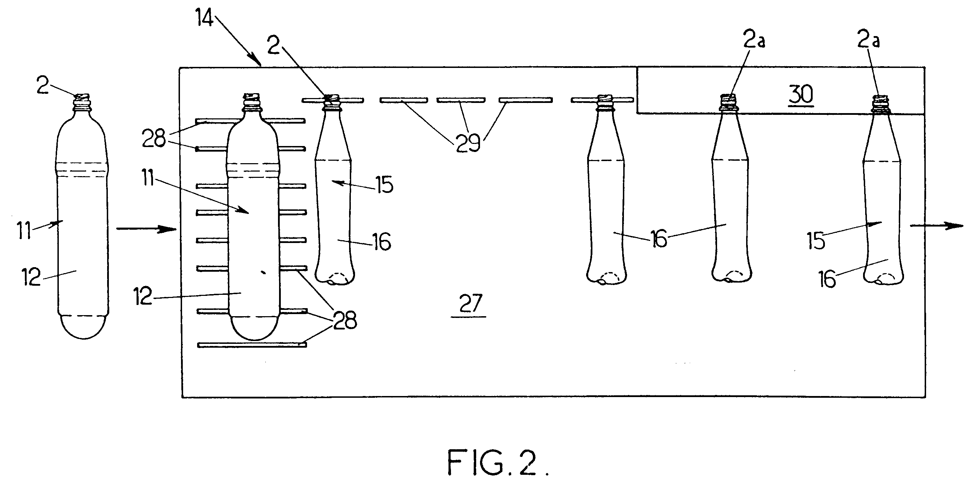

A la sortie du premier poste de moulage 7, on dispose d'un récipient intermédiaire 11 qui présente toujours le même goulot 2 en PET amorphe et un corps 12 étiré biaxialement de dimensions sensiblement plus grandes (environ 20 % en hauteur et de 0 à 30 % transversalement) que celles du récipient définitif à obtenir. Le récipient intermédiaire 11 est emporté par un transporteur 13 jusqu'à un poste de traitement 14 qui comprend un deuxième poste de chauffage dans lequel le goulot et le corps du récipient intermédiaire 11 sont soumis à un traitement thermique. Le corps est porté à une température de 160 à 240°C pendant une durée de 30 s mn à 5 mn, de préférence 200°C pendant environ 1 mn 30 s. Dans ce même poste de traitement 14, le goulot chauffé subit ensuite un refroidissement contrôlé, dans des conditions permettant l'achèvement de la cristallisation du PET du goulot seul. L'agencement et le fonctionnement du poste de traitement 14 sera explicité ultérieurement en regard des figures 2 à 4.

A la sortie du poste de traitement 14, le récipient 15 (voir figure 5) a son corps 16 chaud notablement déformé et rétracté, tandis que son goulot 2a froid est cristallisé. Il est acheminé, par un transporteur 17, jusqu'à un second poste de moulage 18 (lui aussi avantageusement agencé sous forme d'un carrousel). Le corps 16 du récipient 15 est introduit dans une matrice 19 dont la cavité 20 possède la forme et les dimensions du corps du récipient à obtenir. L'opération se déroule comme précédemment : un mandrin 21 est introduit dans le corps 16 et déplacé pour allonger axialement celui-ci et le centrer sur le fond de la cavité 20 ; de l'air comprimé sous 30 à 40 bars est introduit pour dilater le corps 16 et lui faire épouser le contour de la cavité 20, la matrice étant à une température de 60°C à 120°C. La durée totale du cycle est de 2 à 6 secondes.

A la sortie du second poste de moulage 18, on recueille un récipient 22 dont le corps 23 possède sa forme et ses dimensions définitives. Dans le cas où ce récipient 22 possède un fond hémisphérique (comme c'est le cas pour la bouteille qui a été prise en considération sur les figures), il est ensuite acheminé, par un transporteur 24, vers un dernier poste de finition pour recevoir une embase 25 à fond plat conférant au récipient définitif 26 (voir figure 5) la stabilité requise en position verticale.

En se référant aux figures 2 à 4, on va maintenant décrire de façon plus détaillée la fonction et des exemples de structure du poste de traitement 14, pour assurer simultanément le chauffage du corps 12 du récipient intermédiaire surdimensionné 11 en vue de la seconde étape d'étirage-soufflage subséquente et le chauffage et le refroidissement contrôlé du goulot 2 de manière à faire cristalliser le PET constitutif du seul goulot.

Dans une première variante de mise en oeuvre illustrée à la fig. 2, le récipient intermédiaire 11 est introduit dans un four 27 où il se déplace suivant un mouvement de translation horizontale tout en étant animé d'un mouvement de rotation autour de son axe vertical (température ambiante du four : 160-240°C, de préférence 200°C environ).

Le récipient intermédiaire 11 passe devant un premier ensemble de lampes à rayonnement infrarouge 28 qui sont agencées pour chauffer le seul corps 12 dudit récipient. Sous l'action de ce chauffage, les contraintes induites lors de l'étirage biaxial mis en jeu pour la formation du corps 12 du récipient intermédiaire sont relaxées et ce corps se rétrécit (corps 16). En outre, ce chauffage a pour effet d'augmenter le taux de cristallinité de la matière constituant le corps du récipient.

La durée du chauffage est fonction de la matière, de l'orientation du récipient intermédiaire et de l'épaisseur de sa paroi. A titre d'exemple, pour un récipient intermédiaire d'un volume voisin de deux litres, d'un poids de 50 grammes, une durée de chauffage de 30 secondes permet d'obtenir un taux de cristallinité de 40 à 45 % dans les parois du corps et dans le fond.

Dès que le récipient intermédiaire s'est rétréci sous l'action de la chaleur (durée du traitement thermique de 3 à 30 s, typiquement environ 5s), il est procédé à la cristallisation sphérolitique du goulot 2 de celui-ci qui, jusqu'alors, est toujours constitué en PET amorphe.

Pour ce faire, le goulot 2 est chauffé par l'intérieur et par l'extérieur. Le chauffage intérieur est réalisé par un mandrin chauffant (non représenté), introduit dans le goulot, dont la température est maintenue entre 110 et 200°C (de préférence 140°C). Le chauffage extérieur est réalisé par des lampes à rayonnement infrarouge 29 et par la température ambiante règnant dans le four 27.

La durée du traitement de cristallisation est fonction du matériau et de l'épaisseur. A titre d'exemple, cette durée est d'environ 45 secondes pour un goulot de type normalisé 28 MCA 2 et le taux de cristallinité obtenu est d'environ 35 %.

Après que le goulot ait été chauffé, il est maintenu en 30 dans une ambiance dont la température est comprise entre 50 et 100°C, pendant une durée de 5 à 30 s (typiquement 20 s environ), puis refroidi (par un courant d'air pulsé par exemple dont la température est de 20 à 40°C). Pour un goulot de type 28 MCA 2, la durée du maintien dans l'ambiance entre 50 et 100°C est d'environ 20 secondes et la durée du refroidissement (par air pulsé) est de 20 à 40 secondes.

Pendant ce temps, le corps rétréci 16 du récipient intermédiaire 15 est maintenu dans le four 27 à une température comprise entre 160 et 240°C. Si cela est nécessaire, le corps peut être réchauffé avant sa sortie du four par des lampes à rayonnement infrarouge.

Enfin, le récipient intermédiaire 15 dont le corps rétréci 16 est chaud et le col 29 est cristallisé est extrait du four 27 et dirigé vers le second poste de moulage par étirage-soufflage 18 où sa forme définitive lui sera donnée.

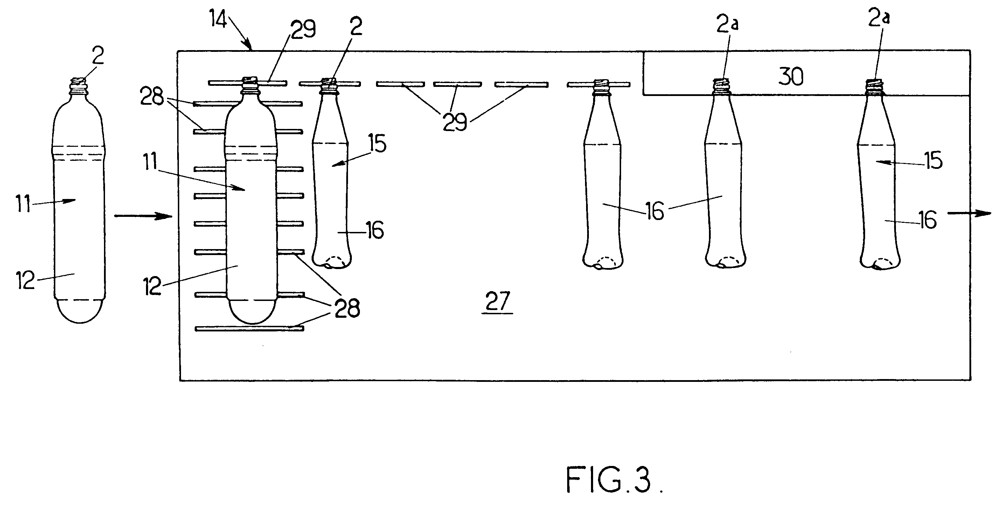

Dans une deuxième variante de mise en oeuvre illustrée à la figure 3 (sur laquelle on a repris les mêmes références numériques que sur la figure 2), le chauffage du corps 12 par un rayonnement infrarouge pour le rétrécir rapidement et le chauffage du col par l'intérieur et l'extérieur pour le cristalliser commencent simultanément, tandis que le déroulement de la suite du processus, et notamment les conditions de durée et de température, restent identiques à ce qui a été indiqué pour la première variante.

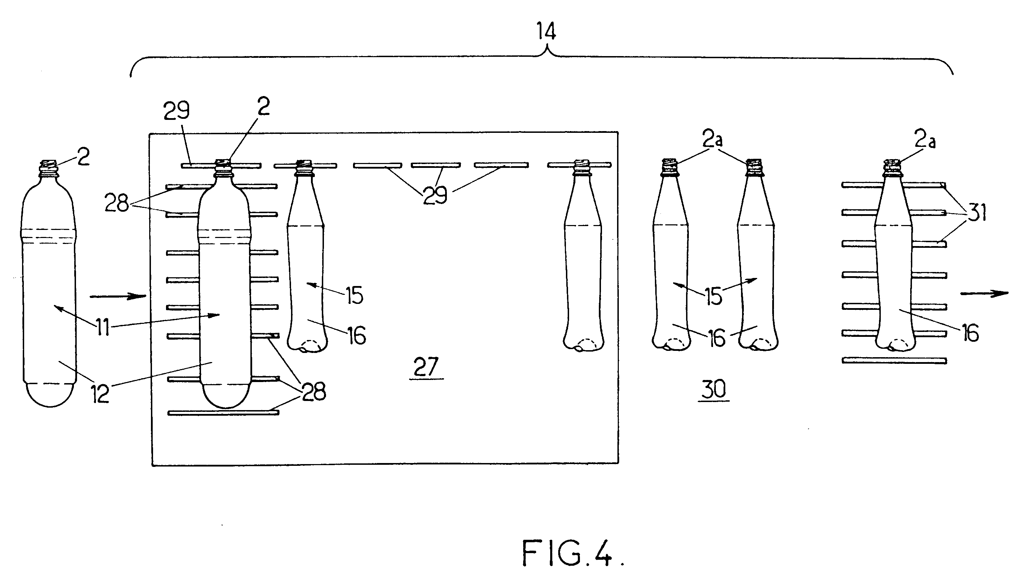

Dans une troisième variante de mise en oeuvre illustrée à la figure 4 (sur laquelle on a conservé les mêmes références numériques que sur la fig. 2), on commence par effectuer un chauffage du corps 12 et du col 2 du récipient intermédiaire dans un four 27, soit de façon décalée dans le temps comme pour la première variante, soit de façon simultanée comme pour la deuxième variante, dans les mêmes conditions de durée et de température. On procède ensuite à un refroidissement contrôlé -en 30- de l'ensemble du récipient intermédiaire 15 à corps rétréci 16, qui conduit à la cristallisation du PET du seul goulot 2a. Ce refroidissement a une durée de 10 à 60 s, typiquement d'environ 40s.

On fait ensuite passer le récipient intermédiaire 15 dans un troisième dispositif de chauffage 31 qui effectue un nouveau chauffage rapide de 3 à 20 s (typiquement d'environ 5 s) du corps rétréci 16 seul afin de le placer dans les conditions de température requises pour la seconde étape d'étirage-soufflage.

A cette même fin, on peut également, en variante, effectuer un chauffage global du récipient intermédiaire 15 avec un rayonnement infrarouge pendant une durée brève (environ 5 s) : le goulot cristallisé 2a n'aura pas le temps de s'échauffer sensiblement en raison de l'épaisseur notable de sa paroi tandis que la paroi, plus mince, du corps rétréci 16 sera rapidement portée à la température requise pour l'étirage-soufflage.

Comme il va de soi et comme il résulte d'ailleurs déjà de ce qui précède, l'invention ne se limite nullement à ceux de ses modes d'application et de réalisation qui ont été plus particulièrement envisagés ; elle en embrasse, au contraire, toutes les variantes.

## Revendications

1. Procédé pour fabriquer des récipients tels que des bouteilles en polyéthylènetéréphtalate (PET) aptes à subir, ultérieurement, sans déformations notables; des conditions thermiques relativement sévères rencontrées au cours de processus tels que leur remplissage par un liquide chaud ou la pasteurisation de leur contenu, caractérisé en ce qu'il comprend la succession des étapes suivantes :
a) on chauffe, à, une température au moins égale à la température de ramollissement du PET, le corps seul (3) (en excluant le goulot (2)) d'une préforme (1) du récipient constituée en PET amorphe, avec le goulot (2) du récipient déjà conformé à sa forme et à ses dimensions définitives ;
b) on moule le corps (3) de préforme chaud pour constituer un récipient intermédiaire (11) dont le corps (12) possède des dimensions supérieures d'environ 20 % en hauteur et de 0 à 30 % transversalement aux dimensions du récipient définitif à obtenir, tandis que les parois de conformation par moulage du récipient intermédiaire sont refroidies à une température d'environ 5 à 40°C ;
c) dans une ambiance à température comprise entre 160° et 240°C, on chauffe ensuite le corps (12) du récipient intermédiaire (11) à une température de 160 à 240°C pendant une durée d'environ 30 s à 5 mn ; et, après ou pendant tout ou partie de la durée de chauffage du corps (12), on chauffe également le goulot (2) dans des conditions de température et de durée propres à assurer la cristallisation du PET du goulot seul, puis on procède à un refroidissement relativement lent du goulot (2a) ;
d) puis enfin, le corps rétréci chaud (16) du récipient intermédiaire (15) obtenu à la fin de l'étape c) est moulé une nouvelle fois à sa forme et à ses dimensions définitives pendant une durée d'environ 2 à 6 secondes.

2. Procédé selon la revendication 1, caractérisé en ce que, pour la mise en oeuvre de l'étape c), on commence par chauffer le corps (12) seul du récipient intermédiaire (11), le goulot (2) n'étant pas chauffé ; puis on chauffe le goulot en même temps qu'on poursuit le chauffage du corps (16) ; enfin on refroidit le goulot (2a) seul pendant que se poursuit et s'achève le chauffage du corps seul (16).

3. Procédé selon la revendication 2, caractérisé en ce que le chauffage préalable du corps seul (12) est effectué pendant une duréeé de 3 à 30 s, notamment d'environ 5 s.

4. Procédé selon la revendication 1, caractérisé en ce que, pour la mise en oeuvre de l'étape c), on chauffe simultanément l'ensemble du récipient intermédiaire (11), corps (12) et goulot (2) ; puis on refroidit le goulot seul (2a) pendant que se poursuit et s'achève le chauffage du corps seul (16).

5. Procédé selon l'une quelconque des revendications 2 à 4, caractérisé en ce que le refroidissement du goulot seul (2a) comprend une étape de stabilisation à une température ambiante comprise entre 50 et 100°C pendant une durée de 5 à 30 s, notamment d'environ 20 s ; puis une étape de refroidissement proprement dite pendant une durée de 20 à 40 s, notamment d'environ 25 s.

6. Procédé selon la revendication 1, caractérisé en ce que, pour la mise en oeuvre de l'étape c), on chauffe simultanément l'ensemble du récipient intermédiaire (11), goulot (2) et corps (12) ; puis on refroidit simultanément l'ensemble du récipient obtenu (15), goulot 2a) et corps (16) ; puis enfin on chauffe à nouveau le corps (16) en vue de la mise en oeuvre de l'étape d).

7. Procédé selon la revendication 6, caractérisé en ce que, pour le chauffage final, on chauffe le corps (16) seul.

8. Procédé selon la revendication 6, caractérisé en ce que, pour le chauffage final, on chauffe l'ensemble du récipient (15), goulot (2a) et corps (16), avec un rayonnement infrarouge pendant une courte durée, ce grâce à quoi seul le corps du récipient est substantiellement chauffé.

9. Procédé selon la revendication 7 ou 8, caractérisé en ce que le chauffage final du corps (16) en vue de la mise en oeuvre de l,étape d) est effectué pendant une durée de 3 à 20 s, notamment d'environ 5 s.

10. Procédé Selon la revendication 6, caractérisé en ce que le refroidissement simultané de l'ensemble du récipient (15), corps (16) et goulot (2a), est effectué pendant une durée de 10 à 60 s, notamment d'environ 40 s.

11. Procédé selon l'une quelconque des revendications 1 à 10, caractérisé en ce que le chauffage simultané de l'ensemble du récipient, goulot et corps, au cours de l'étape c) est effectué pendant une durée de 30 à 90 s, notamment d'environ 45 s.

12. Installation pour fabriquer des récipients, tels que des bouteilles, en polyéthylènetéréphtalate (PET) aptes à subir, ultérieurement, sans déformations notables, des conditions thermiques relativement sévères rencontrées au cours de processus tels que leur remplissage avec un liquide chaud ou la pasteurisation de leur contenu, comprenant :
- un premier dispositif de chauffage (4) pour chauffer, à une température au moins égale à la température de ramolissement du PET, le corps (3) seul (à l'exclusion du goulot (2)) d'une préforme du récipient (1) constituée en PET amorphe, avec le goulot déjà conformé à sa forme et à ses dimensions définitives, ce dispositif étant en outre agencé pour assurer une protection thermique du goulot afin d'empêcher son échauffement ;
- une première matrice de moulage (8) pour former le corps d'un récipient intermédiaire (11) à partir du corps (3) de la préforme (1), la première matrice de moulage possédant une cavité de moulage (9) ayant des dimensions supérieures d'environ 20 % en hauteur et de 0 à 30 % transversalement aux dimensions du récipient définitif à obtenir, cette première matrice étant équipée de moyens de refroidissement des parois de la cavité à une température d'environ 5 à 40°C ; et
- une seconde matrice de moulage (19) pour former le corps du récipient définitif à partir du corps chauffé (16) du récipient intermédiaire (15), cette seconde matrice de moulage possédant une cavité de moulage (20) ayant les dimensions correspondant à celles du corps du récipient définitif et étant munie de moyens permettant le maintien des parois de la cavité à une température déterminée ;
caractérisée en ce qu'elle comprend en outre un poste de traitement (14) dans une ambiance à température comprise entre 160° et 240°C avec un deuxième dispositif de chauffage (27) comportant un premier ensemble de chauffage pour chauffer le corps (12) du récipient intermédiaire (11) à une température d'environ 160 à 240°C et un second ensemble de chauffage pour chauffer également, après ou pendant tout ou partie du chauffage du corps, le goulot dans des conditions de température et de durée propres à assurer la cristallisation du PET du goulot seul ; ce poste de traitement comportant en outre des moyens de refroidissement relativement lent du goulot (2a).

13. Installation selon la revendication 12, caractérisée en ce que le deuxième dispositif de chauffage (27)est agencé pour que le premier ensemble de chauffage chauffe d'abord le corps seul (12) du récipient intermédiaire (11), le goulot (2) n'étant pas chauffé ; puis pour que les premier et second ensembles de chauffage chauffent l'ensemble du récipient (15) respectivement corps et goulot ; et enfin pour que le premier ensemble de chauffage continue et achève le chauffage du corps seul (16) pendant que le goulot (2a) est refroidi (en 30).

14. Installation selon la revendication 12, caractérisée en ce que le deuxième dispositif de chauffage (27) est agencé pour que les premier et second ensembles de chauffage chauffent l'ensemble du récipient intermédiaire (11, 15), respectivement corps (12, 16) et goulot (2) ; puis pour que le premier ensemble de chauffage continue et achève le chauffage du corps seul (16) pendant que le goulot (2a) est refroidi.

15. Installation selon la revendication 12, caractérisée :
- en ce que le deuxième dispositif de chauffage (27) est agencé pour que les premier et second ensembles de chauffage chauffent l'ensemble du récipient intermédiaire (11, 15), corps (12, 16) et goulot (2) ;
- en ce que les moyens de refroidissement (30) sont agencés pour refroidir l'ensemble du récipient (15), goulot (2a) et corps (16) ; et
- en ce qu'il est prévu ensuite un troisième dispositif de chauffage (31) agencé pour chauffer le corps (16) du récipient (15) avant l'introduction de celui-ci dans la seconde matrice de moulage.

16. Installation selon la revendication 15, caractérisée en ce que le troisième dispositif de chauffage (31) est agencé pour chauffer le corps seul (16) du récipient (15).

17. Installation selon la revendication 15, caractérisée en ce que le troisième dispositif de chauffage est agencé pour chauffer l'ensemble du récipient (15), corps (16) et goulot (2a), et est équipé d'organes de chauffage émettant un rayonnement infrarouge, ce grâce à quoi seul le corps est substantiellement chauffé.

## Claims

1. A process for the manufacture of containers such as bottles made from polyethylene terephthalate (PET) able to be subjected subsequently, without any appreciable deformation, to relatively severe thermal conditions encountered during processes such as filling with a hot liquid or pasteurization of the content of the container, characterized by comprising the succession of the following steps :
a) heating only the body (3) (exclusive of the neck section (2)) of an amorphous PET preform (1) to a temperature at least equal to the PET-softening temperature, the neck section (2) of the container being already formed with its final shape and dimensions ;
b) blow molding the heated preform body (3) to form an intermediate container (11) whose body (12) has dimensions greater, by about 20 % with respect to height and by 0 to 30 % transversely, than the dimensions of the final container to be formed, while cooling the mold walls molding the intermediate container to a temperature of about 5 to 40°C ;
c) in an atmosphere having a temperature between 160° and 240°C, then heating the body (12) of the intermediate container (11) to a temperature of 160 to 240°C for a period of about 30 sec to 5 minutes ; heating also the neck section (2) after or during part of or the entire body heating time under temperature and time conditions adapted to allow crystallization of the PET of the neck section alone, then relatively slowly cooling the neck section (2a) ;
d) then finally blow molding once more the heated contracted body (16) of the intermediate container (15) obtained at the end of step c) to its final shape and dimensions for a period of about 2 to 6 seconds.

2. The process according to claim 1, characterized by, for the implementation of step (c), firstly heating only the body (12) of the intermediate container (11), the neck (2) being not heated ; then heating the neck section while heating of the body (16) continues ; finally cooling the neck section (2a) alone while the heating of the body (16) alone is continued and completed.

3. The process according to claim 2, characterized in that preliminary heating of the body (12) alone is provided for a period of from about 3 to 30 seconds, particularly of about 5 seconds.

4. The process according to claim 1, characterized by, for the implementation of step (c), simultaneously heating the entire intermediate container (11), both the body (12) and the neck section (2) ; then cooling the neck section (2a) alone while heating of the body (16) alone is continued and completed.

5. The process according to anyone of claims 2 to 4, characterized in that cooling of the neck section (2a) alone comprises a step of stabilization at an ambient temperature of between 50 and 100°C for a time of 5 to 30 seconds, particularly for about 20 sec ; then a step of actual cooling for a time of 20 to 40 seconds, particularly for about 25 sec.

6. The process according to claim 1, characterized by, for the implementation of step (c), simultaneously heating the entire intermediate container (11), both the body (2) and the neck section (12) ; then simultaneously cooling the entire container (15) thus obtained, the neck section (2a) and the body (16) ; then finally heating once more the body (16) for the implementation of the step d).

7. The process according to claim 6, characterized in that, during the final heating step, the body (16) alone is heated.

8. The process according to claim 6, characterized in that, during the final heating step, the entire container (15), the neck section (2a) and the body (16), is heated with an infrared radiation for a short duration, whereby the body alone of the container is substantially heated.

9. The process according to claim 7 or 8, characterized in that the final heating of the body (16) for the implementation of step d) is provided for a time of 3 to 20 seconds, particularly for about 5 seconds.

10. The process according to claim 6, characterized in that the simultaneous cooling of the entire container (15), the body (16) and the neck section (2a), is provided for a time of 10 to 60 seconds, particularly for about 40 seconds.

11. The process according to anyone claim 1 to 10, characterized in that the simultaneous heating of the entire container, the neck section and the body, during the step c) is provided for a time of 30 to 90 seconds, particularly for about 45 seconds.

12. An equipment for manufacturing containers, such as bottles, made from polyethylene terephthalate (PET) able to be subjected subsequently, without any appreciable deformation, to relatively severe thermal conditions encountered during processes such as filling with a hot liquid or pasteurization of the content of the container, comprising :
- a first heating device (4) for heating, to a temperature at least equal to the PET-softening temperature, only the body (3) (exclusive of the neck section (2) ) of an amorphous PET preform, the neck section being already formed with its final shape and dimensions, said device being further adapted so as to provide thermal protection for the neck section in order to prevent it from being heated ;
- a first mold (8) provided to shape the body of an intermediate container (11) from the body (3) of the preform (1), the first mold having a molding cavity (9) with dimensions larger than the dimensions of the final container to be obtained by about 20 % with respect to height and from 0 to 30 % transversely, said first mold being provided with means for cooling the walls of the cavity to a temperature of about 5 to 40°C ; and
- a second mold (19) provided to shape the body of the final container from the heated body (16) of the intermediate container (15), said second mold having a molding cavity (20) with dimensions corresponding to dimensions of the body of the final container and being provided with means enabling the walls of the cavity to be kept at a determined temperature ;
characterized in that it comprises furthermore a treatment station (14) in an atmosphere at a temperature between 160° and 240°C, with a second heating device (27) including a first heating unit designed to heat the body (12) of the intermediate container (11) to a temperature of about 160 to 240°C and a second heating unit to heat also the neck, after or during part of or the entire body heating time, under temperature and time conditions adapted to ensure crystallization of the PET of the neck section only ; said treatment station including furthermore means for relatively slowly cooling the neck section (2a).

13. An equipment according to claim 12, characterized in that the second heating device (27) is arranged so that the first heating unit first heat only the body (12) of the intermediate container (11), the neck section (2) being not heated ; then that first and second heating units heat the entire container (15), respectively the body and the neck section ; and finally that the first heating unit continues and completes the heating of the body (16) alone while the neck section (2a) is cooled (at 30).

14. An equipment according to claim 12, characterized in that the second heating device (27) is arranged so that first and second heating units heat the entire intermediate container (11, 15), respectively the body (12, 16) and the neck section (2) ; then that the first heating unit continues and completes the heating of the body (16) alone while the neck section (2a) is cooled.

15. An equipment according to claim 12, characterized in :
- that the second heating device (27) is arranged so that first and second heating units heat the entire intermediate container (11, 15), the body (12, 16) and the neck section (2) ;
- that the cooling means (30) are arranged so as to cool the entire container (15), the neck section (2a) and the body (16) ; and
- that a third heating device (31) is provided and to heat the body (16) of the container (15) prior to placing it in the second mold.

16. An equipment according to claim 15, characterized in that the third heating device (31) is arranged to heat the body (16) alone of the container (15).

17. An equipment according to claim 15, characterized in that the third heating device is arranged to heat the entire container (15), the body (16) and the neck section (2a), and is provided with heating elements which emit an infrared radiation, whereby the body alone is substantially heated.

## Patentansprüche

1. Verfahren zum Herstellen von Behältern, wie Flaschen aus Polyethylenterephthalat (PET), die später ohne merkliche Verformung relativ extremen thermischen Bedingungen standhalten, wie sie beispielsweise dann auftreten können, wenn die Behälter mit einer heißen Flüssigkeit gefüllt werden oder ihr Inhalt pasteurisiert wird, dadurch gekennzeichnet, daß es die nachstehende Folge von Schritten umfaßt:
a) man erwärmt allein den Körper (3) (ohne den Hals (2)) eines Vorförmlings (1) des aus amorphem PET gebildeten Behälters auf die Erweichungstemperatur von PET, wobei der Hals (2) des Behälters bereits in seine endgültige Form und Abmessungen gebracht worden ist;
b) man formt den warmen Körper (3) des Vorförmlings zur Bildung eines Zwischenbehälters (11), dessen Körper (12) größere Abmessungen besitzt, etwa 20 % in der Höhe und 0 bis 30 % transversal, als die Nennmaße des herzustellenden Behälters, während die durch das Formen gebildeten Wände des Zwischenbehälters auf eine Temperatur von etwa 5 bis 40°C abgekühlt werden;
c) danach wird der Körper (12) des Zwischenbehälters (11) in einer Umgebungstemperatur, die zwischen 160 und 240°C liegt, auf eine Temperatur von 160 bis 240°C während einer Dauer von etwa 30 s bis 5 min erwärmt; und nach oder während der gesamten oder eines Teils der Dauer der Erwärmung des Körpers (12) wird auch der Hals (2) bei einer Temperatur und während einer Dauer erwärmt, die geeignet sind, die Kristallisation des PET allein des Halses zu gewährleisten, wonach der Hals (2a) relativ langsam abgekühlt wird;
d) und schließlich wird der zusammengeschrumpfte warme Körper (16) des Zwischenbehälters (15), der sich am Ende des Schrittes c) ergibt, während einer Dauer von etwa 2 bis 6 s erneut in seine endgültige Form und auf seine endgültigen Abmessungen geformt.

2. Verfahren nach Anspruch 1, dadurch gekennzeichnet, daß zur Durchführung des Schrittes c) das Erwärmen allein des Körpers (12) des Zwischenbehälters (11) begonnen wird, während der Hals (2) nicht erwärmt ist; dann der Hals in der gleichen Zeit, in der die Erwärmung des Körpers (16) durchgeführt wird, erwärmt wird; und schließlich der Hals (2a) allein, während sich die Erwärmung allein des Körpers (16) vollzieht, abgekühlt wird.

3. Verfahren nach Anspruch 2, dadurch gekennzeichnet, daß die vorläufige Erwärmung allein des Körpers (12) während einer Dauer von 3 bis 30 s, insbesondere etwa 5 s, durchgeführt wird.

4. Verfahren nach Anspruch 1, dadurch gekennzeichnet, daß zur Durchführung des Schrittes c) der gesamte Zwischenbehälter (11) aus Körper (12) und Hals (2) gleichzeitig erwärmt wird und dann allein der Hals (2a) im Verlauf der Erwärmung allein des Körpers (16) abgekühlt wird.

5. Verfahren nach einem der Ansprüche 2 bis 4, dadurch gekennzeichnet, daß die Abkühlung allein des Halses (2a) eine Phase der Stabilisation bei einer Umgebungstemperatur zwischen 50 und 100°C während einer Dauer von 5 bis 30 s, insbesondere 20 s, umfaßt; und dann eine Phase der eigentlichen Abkühlung während einer Dauer von 20 bis 40 s, insbesondere etwa 25 s.

6. Verfahren nach Anspruch 1, dadurch gekennzeichnet, daß zur Durchführung des Schrittes c) der gesamte Zwischenbehälter (11), Hals (2) und Körper (12) gleichzeitig erwärmt und dann der gesamte so gebildete Behälter (15) aus Hals (2a) und Körper (16) abgekühlt und schließlich der Körper (16) im Hinblick auf die Durchführung des Schrittes d) erneut erwärmt wird.

7. Verfahren nach Anspruch 6, dadurch gekennzeichnet, daß zur endgültigen Erwärmung der Körper (16) allein erwärmt wird.

8. Verfahren nach Anspruch 6, dadurch gekennzeichnet, daß zur endgültigen Erwärmung der gesamte Behälter (15) aus Hals (2a) und Körper (16) durch Infrarotbestrahlung während einer kurzen Dauer erwärmt wird, so daß allein der Körper des Behälters im wesentlichen erwärmt ist.

9. Verfahren nach Anspruch 7 oder 8, dadurch gekennzeichnet, daß die endgültige Erwärmung des Körpers (16) im Hinblick auf die Durchführung des Schrittes d) während einer Dauer von 3 bis 20 s, insbesondere etwa 5 s, bewirkt wird.

10. Verfahren nach Anspruch 6, dadurch gekennzeichnet, daß die gleichzeitige Abkühlung des gesamten Behälters (15) aus Körper (16) und Hals (2a) während einer Dauer von 10 bis 60 s, insbesondere etwa 40 s, bewirkt wird.

11. Verfahren nach einem der Ansprüche 1 bis 10, dadurch gekennzeichnet, daß die gleichzeitige Erwärmung des gesamten Behälters aus Hals und Körper im Verlauf des Schrittes c) während einer Dauer von 30 bis 90 s, insbesondere etwa 45 s, bewirkt wird.

12. Vorrichtung zum Herstellen von Behältern, wie Flaschen, aus Polyethylenterephthalat (PET), die später ohne merkliche Verformungen relativ extremen thermischen Bedingungen standhalten, wie sie bei solchen Verfahren, wie dem Füllen mit einer heißen Flüssigkeit oder der Pasteurisierung ihres Inhalts, auftreten, mit:
- einer ersten Erwärmungseinrichtung (4) zum Erwärmen allein des Körpers (3) (ohne den Hals (2)) eines Vorförmlings des Behälters (1) aus amorphem PET auf eine Temperatur, die wenigstens gleich der Erweichungstemperatur von PET ist, wobei der Hals bereits in seine endgültige Form und auf seine endgültigen Abmessungen geformt ist und die Vorrichtung als thermischer Schutz für den Hals geeignet ist, um seine Erwärmung zu verhindern;
- einem ersten Formwerkzeug (8) zum Formen des Körpers eines Zwischenbehälters (11) aus dem Körper (3) des Vorförmlings (1), wobei das erste Formwerkzeug einen Formhohlraum (9) mit Abmessungen aufweist, die etwa 20 % größer in der Höhe und 0 bis 30 % in der Breite als die Abmessungen des herzustellenden definitiven Behälters sind, und dieses erste Formwerkzeug mit Mitteln zum Abkühlen der Wände des Hohlraums auf eine Temperatur von etwa 5 bis 40 °C versehen ist; und
- einem zweiten Formwerkzeug (19) zum Formen des Körpers des Behälters aus dem erwärmten Körper (16) des Zwischenbehälters (15), wobei das zweite Formwerkzeug einen Formhohlraum (20) mit Abmessungen aufweist, die denjenigen des Körpers des endgültigen Behälters entsprechen, und mit Mitteln versehen ist, die es gestatten, die Wände des Hohlraums auf einer vorbestimmten Temperatur zu halten;
dadurch gekennzeichnet, daß sie unter anderem aufweist:
- eine Behandlungsstation (14) in einer zwischen 160 und 240°C liegenden Umgebungstemperatur mit einer zweiten Erwärmungseinrichtung (27) die eine erste Erwärmungsanordnung aufweist, um den Körper (12) des Zwischenbehälters (11) auf eine Temperatur von etwa 160 bis 240°C zu erwärmen, und eine zweite Erwärmungsanordnung aufweist, um auch den Hals, nach oder während der gesamten oder einer Teils der Erwärmung des Körpers bei Temperaturbedingungen und während einer Dauer zu erwärmen, die ausreichen, die Kristallisation des PET allein des Halses sicherzustellen; wobei diese Behandlungsstation unter anderem Mittel zum relativ langsamen Abkühlen des Halses (2a) aufweist.

13. Vorrichtung nach Anspruch 12, dadurch gekennzeichnet, daß die zweite Erwärmungseinrichtung (27) so ausgebildet ist, daß die erste Erwärmungsanordnung zunächst nur den Körper (12) des Zwischenbehälters (11) erwärmt, ohne den Hals (2) zu erwärmen; daß dann die erste und zweite Erwärmungsanordnung den gesamten Behälter (15), d.h. Körper und Hals, erwärmen und daß dann die erste Erwärmungsanordnung die Erwärmung allein des Körpers (16) fortsetzt und vollendet, während der Hals (2a) abgekühlt wird (in 30).

14. Vorrichtung nach Anspruch 12, dadurch gekennzeichnet, daß die zweite Erwärmungseinrichtung (27) so ausgebildet ist, daß die erste und zweite Erwärmungsanordnung den gesamten Zwischenbehälter (11, 15), d.h. Körper (12, 16) und Hals (2), erwärmen und daß dann die erste Erwärmungsanordnung die Erwärmung allein des Körpers (16) während der Abkühlung des Halses (2a) fortsetzt und vollendet.

15. Vorrichtung nach Anspruch 12, dadurch gekennzeichnet,
- daß die zweite Erwärmungseinrichtung (27) so ausgebildet ist, daß die erste und zweite Erwärmungsanordnung den gesamten Zwischenbehälter (11, 15) aus Körper (12, 16) und Hals (2) erwärmen;
- daß die Abkühlungsmittel (30) so ausgebildet sind, daß sie den gesamten Behälter (15) aus Hals (2a) und Körper (16) abkühlen; und
- daß ferner eine dritte Erwärmungseinrichtung (31) vorgesehen ist, die geeignet ist, den Körper (16) des Behälters (15) vor dessen Einführung in das zweite Formwerkzeug zu erwärmen.

16. Vorrichtung nach Anspruch 15, dadurch gekennzeichnet, daß die dritte Erwärmungseinrichtung (31) geeignet ist, allein den Körper (16) des Behälters (15) zu erwärmen.

17. Vorrichtung nach Anspruch 15, dadurch gekennzeichnet, daß die dritte Erwärmungseinrichtung geeignet ist, den gesamten Behälter (15) aus Körper (16) und Hals (2a) zu erwärmen, und mit Erwärmungsorganen versehen ist, die eine Infrarotstrahlung emittieren, so daß allein der Körper im wesentlichen erwärmt wird.
